# EUROPEAN PATENT APPLICATION

(11) **EP 0 585 001 A2**
(43) Date of publication of application: **02.03.1994**
(21) Application number: 93306343.0
(22) Date of filing: 11.08.1993
(51) Int. Cl.: G01T 1/40, G01T 1/36, G01T 1/202

(54) **X-ray spectrometry detector**

(30) Priority: 28.08.1992 GB 9218357
(71) Applicant: OXFORD ANALYTICAL INSTRUMENTS LIMITED, Witney, Oxon. OX8 1TL (GB)
(72) Inventor: Lowe, Barrie Glyn, Charlton-on-Otmoor, Kindlington OX5 2UA (GB); Tyrrell, Stuart Graham James, High Wycombe, Bucks HP13 5HE (GB); Bhadare, Santokh Singh, Greenford, Middlesex UB6 8RZ (GB)
(74) Representative: Skone James, Robert Edmund

(57) **Abstract**

An X-Ray spectrometry detector comprises a detector head (1). The detector head is connected to a cold finger (8) of a stirling cycle cooling engine by a flexible coupling (11) to provide cooling for the detector head (1). The flexible coupling may take various forms including a metal braid or bellows.

## Description

This invention relates to an x-ray spectrometry detector.

To obtain high resolution with x-ray spectrometry detectors e.g. lithium drifted silicon crystal x-ray spectrometers, the semi-conductor crystal and associated JFET are operated at a temperature approximately that of liquid nitrogen. This reduces noise associated with thermally generated charge carriers in the semi-conductor crystal and JFET preamplifier. The disadvantage of using liquid nitrogen as a cooling agent is that it is hazardous to operate and inconvenient to refill the storage vessels, as well as being costly.

Liquid nitrogen cooled x-ray detectors are typically cantilevered on the end of a long support structure and are prone to vibration. Devices with stirling engine cooling have been proposed, but these have suffered from motor vibration or compressor vibration from the refrigeration system which cools the detector causing microphony in the detector which causes the energy resolution of the detector to deteriorate.

US-A-5075555 proposes using Peltier cooling rather than liquid nitrogen. Using this method however restricts the choice of detector to either silicon planar or lithium drifted silicon guard ring crystals for high performance because the Peltier device has a cooling power of only about 0.1 watt at -80°C, typically.

In accordance with the present invention, an x-ray spectrometry detector comprises a detector head connected to a cold finger of a stirling cycle cooling engine by a flexible coupling to provide cooling for the detector head.

The invention provides an improved x-ray spectrometry detector which can be used with a wider variety of detector heads whilst maintaining mechanical isolation of the detector from vibration produced by the cooling engine through the flexible coupling. Any degradation of performance due to vibration causing microphonics is therefore prevented.

Preferably, the flexible coupling comprises one of a metal braid, a loom of metal wires, a leaf spring of copper strips, or bellows.

Typically, the flexible coupling is manufactured from copper or aluminium.

Preferably, a vacuum pump is provided to maintain a vacuum around the detector head. The vacuum pump may be an ion pump or diffusion pump, for example.

Typically, the cold finger of the stirling cycle cooling engine provides a cold trap against contaminants. If contaminants such as oil or water condense on the detector head or the braid the performance of the detector could be impaired whereas the cold finger being the coldest part and positioned in line with the vacuum pump (when provided) prevents this.

The detector head may employ standard lithium drifted silicon crystals, planar silicon crystals, or germanium crystals. Standard crystals are smaller (for the same active area) and easier to manufacture than guard ring crystals. Germanium gives a higher resolution.

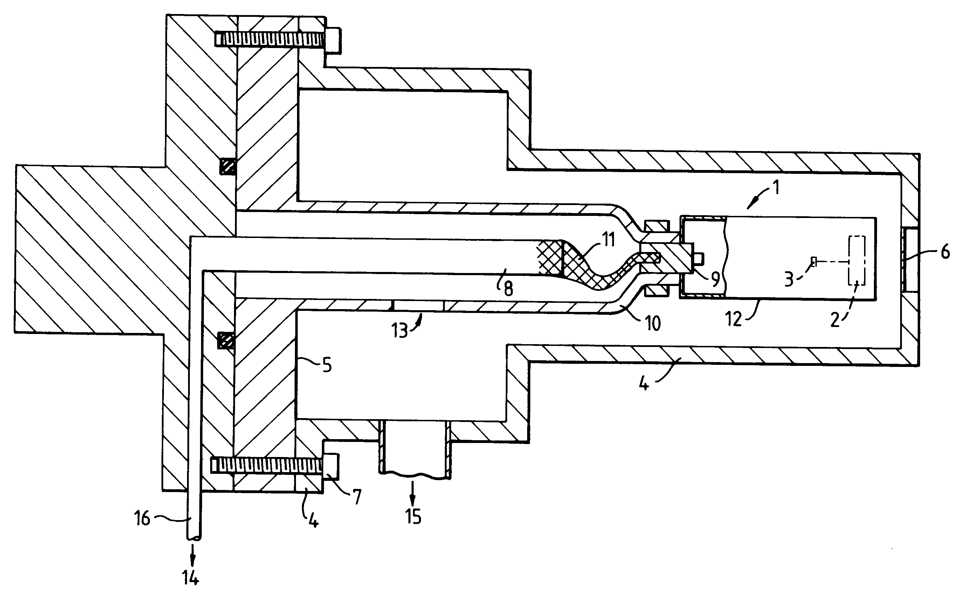

An example of an x-ray spectrometry detector according to the present invention will now be described with reference to the accompanying drawing which shows a longitudinal part sectional view.

An x-ray detector head 1 comprises an aluminium stack 12 containing an x-ray sensitive crystal 2 together with a specially manufactured field effect transistor (FET) 3. The crystal 2 is generally of silicon or germanium and specifically manufactured for the purpose. Both the crystal and the FET are cooled to temperatures of the order of -130 to -160°C.

The x-ray detector head is housed within a vacuum cryostat body 4 which is continuously pumped by means of an ion pump or diffusion pump or any other suitable vacuum pump (not shown). X-rays enter the cryostat 4 through a vacuum-tight window 6 made of a material which has good x-ray transmission properties such as beryllium.

The detector head 1 is clamped to a copper stub 9 which in turn is clamped to a thermally insulating tube 10. The material of the thermally insulating tube 10 can be a suitable plastic, ceramic, or stainless steel. A flange 5, at the base of the tube 10, is bolted onto the cryostat body 4 by bolts 7.

In this example, cooling is achieved by use of a split Stirling cycle cooling engine. However, an integral Stirling cycle cooling engine could be used instead. This consists of two open spaces in open communication with each other via a regenerator. The regenerator is a space filled with a mass of finely divided metal (eg, thin wires). The filling has a high heat capacity and excellent heat transfer properties. The two spaces contain a working gas helium. The engine is driven 14 by a remote compressor (not shown). One space is present in the compressor, the other in a displacer. The compressor is linked to the displacer by a thin steel tubing 16. The first space, in the compressor, is at the ambient temperature T_{A} and the second space, above the regenerator, is at temperature T_{C} in which the refrigeration is produced. The helium is compressed in the first space and the heat of compression is dissipated to the ambient surroundings, after which it passes through the regenerator where it is cooled to T_{C} and then expanded in the second space by the displacer (which is 90° out of phase with the compressor). In this expansion the low temperature is generated and supplied to the cold finger. The gas then returns to the first space, and in passing through the regenerator it is again heated to T_{A}, by reabsorbing the heat it left behind in its previous passage through the regenerator. This process is carried out at constant volume, and this completes the cycle. In this cycle it is important to note that the gas oscillates between the expansion and the compression spaces and does not flow in a closed circuit.

The cold finger 8 is capable of cooling to liquid nitrogen temperatures and below and has considerable cooling power typically one watt at -190°C. This compares favourably with previous cooling devices such as a peltier device. The cold finger 8 is prone to vibration which would cause considerable degradation of x-ray energy resolution, microphonics, if the connector is connected directly to the detecting head 1. It is necessary to prevent this vibration being transmitted to the detector head, but at the same time maintain good thermal connection between the cold finger and the detector head.

The cooling effect of the cold finger 8 is thus transferred to the detector head 1 via flexible copper braid 11 which takes up movement on cooling or from vibration of the cold finger 8. The copper braid 11 is crimped into the copper stub 9 at one end and soldered, clamped or crimped around the cold finger 8 at the other. Holes 13 in the insulating tube 10 allow the volume around the cold finger 8 to be pumped 15 efficiently and the surface of the cold finger acts as a cold trap for contaminants such as water or oil since it is the coldest area in the system and in direct line with the pump. If contaminants were allowed to condense on the surface of the crystal 2, the FET 3 or the copper braid 11, the performance of the detector would be affected unfavourably.

By means of the x-ray spectrometry detector described performance can match that of a conventional liquid nitrogen cooled detector, that is to say with typical resolutions of 133 eV to 140 eV Full Width at Half Maximum Height (FWHM) at 5.9 KeV at 2000 cps input. The detector as described is particularly suitable for use with a spectrometer such as the XR400 sold by Oxford Instruments. This can analyze multiple samples at high speed and with a high level of precision. Another application is micro-analysis.

## Claims

1. An x-ray spectrometry detector, the detector comprising a detector head (1) connected to a cold finger (8), of a stirling cycle cooling engine by a flexible coupling (11) to provide cooling for the detector head (1).

2. A detector according to claim 1, wherein the flexible coupling (11) comprises one of a metal braid, a loom of metal wires, a leaf spring of copper strips, or bellows.

3. A detector according to claim 1 or claim 2, wherein the flexible coupling (11) is manufactured from copper or aluminium.

4. A detector according to any preceding claim, wherein a vacuum pump is provided to maintain a vacuum around the detector head.

5. A detector according to claim 4, wherein the vacuum pump is an ion pump or diffusion pump.

6. A detector according to any preceding claim, wherein the cold finger (8) of the stirling cycle cooling engine provides a cold trap against contaminants.

7. A detector according to any preceding claim, wherein the detector head (1) employs standard lithium drifted silicon crystals, or planar silicon crystals, or germanium crystals.
